(19) Europäisches Patentamt
European Patent Office
Office européen des brevets

(11) **EP 2 532 930 B1**

(12) **EUROPEAN PATENT SPECIFICATION**

(45) Date of publication and mention of the grant of the patent:
**08.07.2020 Bulletin 2020/28**

(21) Application number: **10844827.5**

(22) Date of filing: **01.02.2010**

(51) Int Cl.:
*F16J 12/00* (2006.01)     *F17C 1/06* (2006.01)
*B21D 51/24* (2006.01)     *B29C 53/56* (2006.01)
*B29L 31/00* (2006.01)     *A62B 7/02* (2006.01)
*A62C 13/62* (2006.01)     *F17C 1/16* (2006.01)

(86) International application number:
**PCT/RU2010/000034**

(87) International publication number:
**WO 2011/093737 (04.08.2011 Gazette 2011/31)**

(54) **METAL COMPOSITE PRESSURE CYLINDER**

DRUCKZYLINDER AUS METALLVERBUND

BOUTEILLE MÉTALLIQUE COMPOSITE HAUTE PRESSION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**12.12.2012 Bulletin 2012/50**

(73) Proprietors:
• **Lukyanets, Sergei Vladimirovich**
  **Moskovskaya obl. 141350 (RU)**
• **Moroz, Nikolai Grigorievich**
  **Moskovskaya obl. 141350 (RU)**
• **Lebedev, Igor Konstatinovich**
  **Moskovskaya obl. 141350 (RU)**

(72) Inventors:
• **Lukyanets, Sergei Vladimirovich**
  **Moskovskaya obl. 141350 (RU)**

• **Moroz, Nikolai Grigorievich**
  **Moskovskaya obl. 141350 (RU)**
• **Lebedev, Igor Konstatinovich**
  **Moskovskaya obl. 141350 (RU)**

(74) Representative: **Kratochvil, Vaclav**
**Patent and Trademark Office**
**P.O. Box 26**
**295 01 Mnichovo Hradiste (CZ)**

(56) References cited:
**RU-C1- 2 094 695      RU-C2- 2 210 697
RU-C2- 2 358 187      US-A- 5 287 988
US-A- 5 653 358       US-A- 6 158 605
US-A1- 2009 127 271   US-A1- 2009 200 319**

## Description

### Technical Field

The invention refers to field of gas fittings, namely, metal composite pressure cylinders, used in particular for portable oxygen breathing apparatus for climbers, rescue workers, in portable devices of cryogenic and fire-fighting equipment, gas supply systems, automotive and other industries.

### Previous Technical Level

These cylinders (vessels) are designed for storage and transport of fluid (liquid or gas) under high pressure. Such vessels are usually exposed to repetitive cyclic high pressure loading.

In the cylinders of this type, the material of insulating overwrap, liner, is of great importance, for it is necessary to prevent fluid leakage or loss of sealing. The liner is fabricated from thermoplastic, aluminium or steel depending on the type and character of the fluid that fills the vessel. Currently cylinders with metal liners are most widely used, for they have a number of advantages compared to plastics. Currently available metal composite high pressure cylinders contain internal thin metal sealed overwrap, a liner, and outer pressure overwrap made of composite material formed by winding in different directions on the surface of the liner of high modulus fibre cords (e.g. carbon fibre) impregnated with a binder.

In accordance with the requirements of the current regulatory documents, in addition to the basic requirements to high pressure gas cylinders, decrease of specific consumption of materials and safe operation, there is also a basic requirement to ensure a long lifetime of a cylinder determined by the number of load cycles. Unlike other types of cylinders, this requirement is crucial for the composite metal cylinder structure, because of high heterogeneity of physical and mechanical properties of the materials. The third, also crucial requirement specified in the cylinders regulatory documents is the requirement of a reliable fixing of the cylinder neck choke in a composite overwrap that also provides its multiple torsional loads.

There are numerous examples of composite pressure cylinders with metal liners made of various alloys (see, e.g., patents US 5494188, US 5538680, US 5653358, US 5862938, US 5938209, US 5979692, US 6190598, US 6202674, US 6202674, US 6230922 and US 6158605).

US 6158605 relates s composite tank for holding liquid oxygen, comprising nickel liner; a layer of carbon fibers wrapped around the nickel liner in a cured matrix of an epoxy resin: a layer of foam insulation surrounding the graphite fiber layer; a layer of an aramid fiber wrapped around the foam insulation, said aramid fiber being in a cured matrix of an epoxy resin, said tank having at least one boss on the periphery thereof, said boss being made up of an inner boss of a metal plated with nickel and an outer boss of graphite fibers in a cured epoxy resin, said nickel liner covering the bosses.

However, these constructions cannot completely provide a solution of main targets with regard to the cylinder construction: reliability under heavy high pressure cyclic loading in combination with minimum weight and manufacturing cost comparable or lower than those of all-metal cylinders.

There are numerous examples of composite pressure cylinders with thin metal liners made of various alloys (see, e.g., patents US 3 066 822, US 3 446 385, US 5 292 027, US 5,822,838, US 5 918 759 , WO 03/029718), which allows to partially solve the problem of more heavy high pressure cyclic loading in combination with the weight which is lower than that of all-metal cylinders.

There are numerous design solutions of metal composite cylinders with thin liners, using a variety of methods of the alignment of deformation of the liner material and composite overwrap.

In the construction described in application RU № 2001115743 for high-pressure **cylinder** containing composite overwrap and a thin metal liner, the set problem is solved as follows: the liner wall thickness and composite overwrap thickness are selected based on the assumption that the cylinder main bearing element is a composite overwrap, and the material of metal liner under working pressure is in elastic range. The drawback of this solution is that due to large difference in the values of the limits of fracture deformation of composite material (up to 2%) and the elastic deformation of metal (0.2%), the weight of the construction and its cost are very high, that makes this type of the cylinder non-competitive compared to its metal equivalents.

The construction of the cylinder as per patent RU № 2094695 suggests the use of a metal liner, made with the longitudinal and circumferential corrugations. In this case the external cavities of longitudinal corrugations can be filled with elastic material. Elastomer is used as elastic material.

The drawback of this solution is the following: the construction of the liner designed as a set of longitudinal and circumferential corrugations, increases the general flexural rigidity of the liner, but does not meet the conditions of compatibility of deformations in the material of liner and in the material of composite overwrap. Plastic deformations occur in corrugations under cyclic loading that leads to premature destruction of the liner.

The prototype of the proposed invention is a solution described in patent RU 2358187 C2, 10.09.2008, suggesting to use a liner made a smooth and thin metal, and to select the material for pressure composite overwrap taking into account a specified ratio with regard to geometry and material to the liner.

The drawback of this solution is the following: a criterion of the compatibility of the deformation of heterogeneous construction materials is used as the design criteria for cylinders design, but the construction made with the proposed size ratio does not meet the requirements of the cylinder lifetime with regard to cyclic loading.

### *Disclosure of Invention*

The objective of the invention is to select a material and pattern of reinforcement of forming layers groups to ensure a minimum weight of the construction for the known liner material, taking into account the restrictions for the level of plastic deformation of the liner material.

The technical result of the invention is that the proposed cylinder construction provides high performance at any given level of cyclic high-pressure and torsional loading with minimum weight and manufacturing cost. The advantage of this solution is that the proposed cylinder construction provides the desired lifetime of the cylinder. In addition, there is a real possibility to get an efficient construction with use of the materials of a liner and pressure overwrap depending on the type of the materials. The possibility of high plastic deformations in a liner ultimately leads to the phenomenon of low-cycle material fatigue of the liner. The proposed design of the cylinder meets the requirements of a secure fixing of the cylinder neck choke in the composite overwrap that provides multiple torsional loads.

The technical result is achieved by the following: a metal composite cylinder contains a cylindrical metal liner with profiled bottoms and neck flange with a choke fixed in a pole hole of the pressure overwrap, made of composite material formed by a group of layers of reinforcing filaments orientated in spiral and circumferential directions, with different reinforcing capacity; at that, combination reinforcing capacity and thickness-wise distribution of groups of reinforcing material layers of the pressure overwrap provide the deformation intensity in each point of the liner material that meets the following condition:

$$\frac{1}{2}\varepsilon_u \;=\; \frac{1}{2}\left(\ln\frac{1}{1-\psi}\right)^{0.6} N^{-0.6} + 1.75\frac{\sigma_b}{E}N^{-0.12},$$

where N is a required number of trouble-free operation cycles of the cylinder loaded with working pressure; $\sigma$ is a temporary resistance; $\psi$ is a limit of contraction in area; and E is a modulus of elasticity of the liner material. At that, neck flange of the liner is equipped with a collar on the side of the open end of the choke, with an outer diameter greater than the sum of the pole hole diameter of the composite overwrap and two widths of wound filaments of reinforcing material, so that concentric annular cavity is formed between the outer surface of the composite overwrap and the flange, where a annular band is located filling the entire volume of the cavity; the band is made of the material of the composite overwrap, and the choke of neck flange is fixed in the annular band with grooves of non-circular shape.

Individual groups of layers of reinforcing material filaments of the pressure overwrap orientated in the spiral directions are a part of the annual band material.

Annular band may be fabricated from the materials with higher modulus of elasticity compared to the material of pressure overwrap.

The annular band may be made of materials with different moduli with layered distribution along the diameter of the band.

Annular band fixing grooves may have a polyhedron shape.

Annular band fixing grooves may have an ellipse shape.

The flange collar may be labelled with identification and technical information.

The flange collar may be fabricated as as separate ring rigidly connected to the flange choke.

The outer surface of the annular flange may be with taper towards the collar.

The bottoms of the pressure overwrap formed by a group of layers of reinforcing material filaments orientated in spiral directions, and a cylindrical part formed by a combination of groups of layers of reinforcing material filaments orientated in spiral and circumferential directions, may be aligned in the zone of their junction with regard to annular deformation.

### *Summary of the Invention Drawings*

- Fig. 1 shows a general view of high pressure vessel.

- Fig. 2 shows a version of the cylinder pole flange fixing.

- Fig. 3 shows cross-section of the cylinder flange fixing joint.

- Fig. 4 shows a version of the cylinder pole flange fixing.

### Embodiments of the invention

It is commonly known, the current design methods of the cylinders are based on the laws of the strength under *static* loading, with some corrections considering the characteristics of the used material and construction. Such corrections include load and safety factors.

At the same time, main provisions of mechanics of solids state that the governing conditions for the destruction of the material of the cylinder construction under consideration, under static loading, provide for some limiting surface involved in the moment of destruction.

Current methods do not consider the way of this surface involvement. At the same time, the targeted operational safety of the cylinder is related to the peculiarities of behaviour of metals and alloys used in the construction of cylinders under cyclic deformation, since it determines the so-called fatigue or loading history of the construction.

Fatigue of a construction is a process of gradual accumulation of damage in its material due to the effect of cyclic loads. This particular fatigue is a major cause of destruction of the cylinder construction under consideration or pressure vessels. It is characteristic of fatigue failure that it can have a long incubation period, sometimes years of the device operation during which the detection of signs of impending failure is difficult.

Thus, cyclic and long-term loading of a cylinder construction results in damages accumulated in a metal liner that occur differently, in different ranges of applied stresses.

Obviously, an efficient construction, presupposes the more effective use of high strength characteristics of composite material, i.e. a high level of plastic deformation should be in the liner that eventually results in the phenomenon of low-cycle fatigue of the liner material.

Low-cycle fatigue is characterized by plastic deformations in macroscopic volumes of the liner material in each loading cycle. Low-cycle fatigue occurs when maximum stress exceeds the yield limit of the material, and is accompanied by alternating plastic deformation of the material volume which is larger compared to the size of structural components (grains, pores, inclusions).

The number of cycles before the formation of visible cracks depends largely on the size of plastic deformation of the material in each cycle and on the ability of the material to resist the low-cycle destruction. The behaviour of the material is determined by Bauschinger effect, cyclic hardening or softening of the material (i.e., change in hysteresis loop size and shape with an increase in the cycles number), as well as residual stresses in the construction formed by the incompatibility of plastic deformations.

Main characteristics of plastic deformation process in the point of a body under changes of cyclic loading with the period T is an increment of plastic deformation per cycle

$$\Delta \varepsilon_p = \int_0^T \dot{\varepsilon}_p d\tau,$$

(here, $\varepsilon p$ is the rate of plastic deformation, $\tau$ is time from the beginning of the cycle), and amplitude of plastic deformation per cycle

$$\delta \varepsilon_p = \varepsilon_{p\max} - \varepsilon_{p\min}.$$

The increments and amplitude of plastic deformation as well as plastic hysteresis loop shape and size are different in different points of the construction and usually vary from cycle to cycle.

As a rule, plastic as well as elastic deformations arise in the material of the liner of the cylinder construction under cyclic loading.

For a large number of metals and alloys in the transition area, when it is necessary to take into account both plastic and elastic deformations of the liner material in order to describe the relationships between a number of cycles to failure *Nf* and deformation amplitude of low-cycle fatigue, the following types of experimental approximating functions can be used

$$\frac{1}{2}\varepsilon_a = \frac{1}{2}\left(\ln\frac{1}{1-\psi}\right)^{0.6} N^{-0.6} + 1.75\frac{\sigma_b}{E} N^{-0.12}.$$

Taking into account the mentioned above, the task of the cylinder design can be expressed by the following statement: it is necessary to select a material and pattern of reinforcement of forming layers groups to ensure a minimum weight of the construction for the known liner material, taking into account the restrictions for the level of plastic deformation

$$\frac{1}{2}\varepsilon_a = \frac{1}{2}\left(\ln\frac{1}{1-\psi}\right)^{0.6} N^{-0.6} + 1.75\frac{\sigma_b}{E} N^{-0.12}$$

of the liner material represented as a condition

The set task may be solved in the following way. The construction deformations in circumferential and meridional directions are calculated by known methods for a given load (e.g., an internal test pressure) for the regular distribution of groups of filaments layers, reinforcing materials and their capacity orientated in spiral and circumferential directions of reinforcement in each section of the construction. Based on the data obtained and using the relationship

$$\varepsilon_i = \sqrt{\frac{2}{3}}\sqrt{\varepsilon_\alpha^2 + (\varepsilon_\alpha - \varepsilon_\beta)^2 + \varepsilon_\beta^2}$$

intensity of deformations $\varepsilon_i$, and intensity of stress $\sigma_i$ in the liner material are calculated. Then, using the principle of unified curve of deformation of the liner material, the value of intensity of the liner deformation in compared to limitation $\varepsilon_i \le \varepsilon_\alpha$ for the construction under consideration. When this limitation is met, the construction obtained meets the regulatory requirements with regard to strength as well as operational lifetime.

The construction of minimum weight is selected based on a varying such solutions of distribution of combination of reinforcement capacity and distribution of groups of reinforcing material layers. Thus, the design of the cylinder meets the condition that the combination reinforcing capacity and thickness-like distribution of groups of reinforcing material layers of the pressure overwrap provides the intensity of deformation in each point of the material liner less than

$$\frac{1}{2}\varepsilon_a = \frac{1}{2}\left(\ln\frac{1}{1-\psi}\right)^{0.6} N^{-0.6} + 1.75\frac{\sigma_b}{E} N^{-0.12},$$

(where N is a required number of trouble-free operation cycles of the cylinder loaded at working pressure, σB is a temporary resistance, $\psi$ is a limit of contraction area and E is a modulus of elasticity of the liner material), is an optimal construction.

On the other hand, a reliable operation of the construction is impossible without the cylinder neck area design ensuring reliable operation of the mount flange.

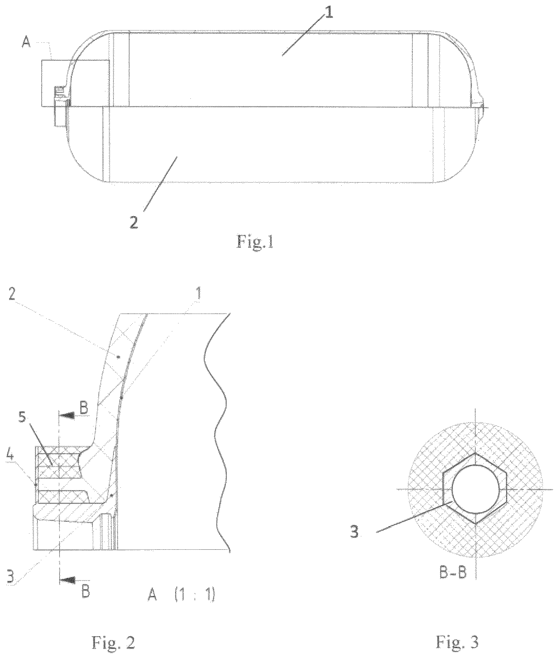

This design solution in represented in Fig. 1 - 4. Metal composite cylinder contains cylindrical metal liner 1 with profiled bottoms and neck flange 3 with a choke fixed in a pole hole of pressure overwrap 2 made of composite material formed by a group of layers of reinforcing filaments orientated in spiral and circumferential directions, with different reinforcing capacity.

Combination of reinforcing capacity and thickness-wise distribution of groups of reinforcing material layers of the pressure overwrap provide the deformation intensity in each point of the liner material meeting the following condition:

$$\frac{1}{2}\varepsilon_a = \frac{1}{2}\left(\ln\frac{1}{1-\psi}\right)^{0.6} N^{-0.6} + 1.75\frac{\sigma_b}{E} N^{-0.12},$$

where $N$ is a required number of trouble-free operation cycles of the cylinder loaded at working pressure, $\sigma$ is a temporary resistance; $\psi$ is a limit of contraction area, and $E$ is a modulus of elasticity of the liner material.

Neck flange 3 of the liner is equipped with collar 4 on the side of the open end of the choke, with an outer diameter greater than the sum of the pole hole diameter of the composite overwrap and two widths of wound filaments of reinforcing material, so that concentric annular cavity is formed between the outer surface of the composite overwrap and the flange, where annular band 5 is located filling the entire volume of the cavity; the band is made of the material of the composite overwrap. Choke of neck flange 3 is fixed in annular band 5 with grooves of non-circular shape.

Individual groups of layers of reinforcing material filaments of pressure overwrap 2 orientated in spiral directions are a part of the annual band material. Annular band 5 may be fabricated from the materials with higher modulus of elasticity compared to the material of pressure overwrap. Annular band 5 may be made of materials with different moduli with layered distribution along the diameter of the band. Annular band 5 fixing grooves may have polyhedron or ellipse shape. Flange collar 4 may be labelled with identification and technical information. The flange collar may be fabricated as a separate ring rigidly connected to the flange choke. The outer surface of annular flange 3 in the zone of the choke may be designed with a taper towards the collar.

The bottoms of pressure overwrap 3 formed by a group of layers of reinforcing material filaments orientated in the spiral directions, and a cylindrical part formed by a combination of groups of layers of reinforcing material filaments orientated in spiral and the circumferential direction, may be aligned in the zone of their junction with regard to annular deformation.

The proposed solution functions as follows: when the pressure overwrap is fabricated by winding method, thickening is formed in the zone of a pole hole. Usually the diameter of the thickening is the sum of the diameter of the pole hole, in which the flange choke is placed and two widths of technological tape of reinforcing material. Above this diameter, there is a smooth wall thickness change of the pressure overwrap due to continuous winding process. When the overwrap is deformed without the band, the overwrap pole hole opens and makes free movement of the flange possible. The band introduction allows controlling the process of the overwrap deformation in a specified zone, and thus, it allows creating a reliable connection of the overwrap and liner in the pole hole.

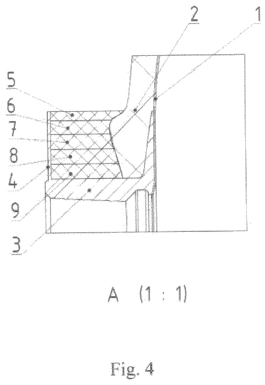

In addition, the band dramatically reduces the stress arising in the pipe of the flange that allows reducing the total weight of the flange construction. The efficiency of the construction under consideration can be significantly increased due to fabrication of the band from the heterogeneous materials 6 - 9 (see Fig. 4) with the bond with composite overwrap material.

Operation of high-pressure cylinder is in the filling it with fluid (liquid or gas) to the required level of pressure, storage, transport, emptying, subsequent new filling, the fluid expenditure, i.e. in the repetition of actions and operations with multiple cyclic loading.

### *Industrial Applicability*

The proposed device provides a real opportunity to use high-pressure vessels made of different materials with use of welded thin metal inner overwrap, liner. Fabrication and testing of high-pressure vessels with the proposed liner for their sealing, confirmed their high reliability and efficiency. Proposed cylinders may be used in portable oxygen breathing apparatus for climbers, rescue workers, in portable devices of cryogenic and fire-fighting equipment, gas supply systems, automotive and other industries.

### Claims

1. Metal composite cylinder contains a cylindrical metal liner (1) with profiled bottoms and neck flange (3) with a choke fixed in a pole hole of the pressure overwrap (2), made of composite material formed by a group of layers of reinforcing filaments orientated in the spiral and circumferential directions, with different reinforcing capacity; **characterised in that** the neck flange (3) of the liner (1) is equipped with a collar (4) on the side of the open end of the choke, with an outer diameter greater than the sum of the pole hole diameter of the composite overwrap (2) and two widths of wound filaments of reinforcing material, wherein concentric annular cavity is formed between the outer surface of the composite overwrap (2) and the flange (3), where an annular band (5) is located filling the entire volume of the cavity; the band (5) is made of the material of the composite overwrap (2), and the choke of neck flange (3) is fixed in the annular band (5) with grooves of non-circular shape, in which a combination of reinforcing capacity and thickness-wise distribution of groups of reinforcing material layers of the pressure overwrap (2) provides the deformation intensity in each point of the liner (1) material meeting the following condition:

$$\frac{1}{2}\varepsilon_a \quad = \quad \frac{1}{2}\left(\ln\frac{1}{1-\psi}\right)^{0.6} N^{-0.6} + 1.75\frac{\sigma_b}{E} N^{-0.12},$$

   where $N$ is a required number of trouble-free operation cycles of the cylinder loaded at working pressure; $\varepsilon_a$ is a deformations amplitude, $\sigma_b$ is a temporary resistance; $\psi$ is a limit of contraction in area; and $E$ is a modulus of elasticity of the liner material.

2. Cylinder of claim 1, wherein individual groups of layers of reinforcing material filaments of pressure overwrap (2) orientated in spiral directions are a part of the annual band (5) material.

3. Cylinder of claim 1, wherein annular band (5) is fabricated from the materials with higher modulus of elasticity compared to the material of pressure overwrap (2).

4. Cylinder of claim 1, wherein the annular band (5) is fabricated from materials with different moduli with layered distribution along the diameter of the band.

5. Cylinder of claim 1, wherein annular band (5) fixing grooves have polyhedron shape.

6. Cylinder of claim 1, wherein annular band (5) fixing grooves have an ellipse shape.

7. Cylinder of claim 1, wherein the flange collar (4) may be labelled with identification and technical information.

8. Cylinder of claim 1, wherein the flange collar (4) is fabricated as a separate ring rigidly connected to the flange choke.

9. Cylinder of claim 1, wherein the outer surface of annular flange in the zone of the choke is designed with a taper towards the collar (4).

10. Cylinder of claim 1, wherein inside of the pressure overwrap (2) formed by a group of layers of reinforcing material filaments orientated in spiral directions, and a cylindrical part formed by a combination of groups of layers of reinforcing material filaments orientated in spiral and circumferential directions, are connected in the zone of their junction with regard to annular deformation.

**Patentansprüche**

1. Der Metallverbundzylinder enthält eine zylindrische Metallauskleidung (1) mit profilierten Böden und Halsflansch (3) mit einer Drossel, die in einem Polloch der Druckumhüllung (2) befestigt ist und aus Verbundmaterial besteht, das aus einer Gruppe von Schichten aus in Spiral- und Umfangsrichtung orientierten Verstärkungsfilamenten mit unterschiedlicher Verstärkungskapazität besteht; **dadurch gekennzeichnet, dass** der Halsflansch (3) der Auskleidung (1) mit einem Kragen (4) an der Seite des offenen Endes der Drossel ausgestattet ist, dessen Außendurchmesser größer ist als die Summe des Pollochdurchmessers der Verbundumhüllung (2) und zwei Breiten von gewickelten Filamenten aus Verstärkungsmaterial, wobei ein konzentrischer ringförmiger Hohlraum zwischen der Außenfläche der Verbundumhüllung (2) und dem Flansch (3) geformt wird, wo sich ein Ringband (5) befindet, das das gesamte Volumen des Hohlraums ausfüllt; das Band (5) besteht aus dem Material der Verbundumhüllung (2), und die Drossel des Halsflansches (3) ist in dem Ringband (5) mit Rillen von nicht kreisförmiger Form befestigt, in denen eine Kombination aus Verstärkungskapazität und dickenbezogener Verteilung von Gruppen von Verstärkungsmaterialschichten der Druckumhüllung (2) die Verformungsintensität in jedem Punkt des Materials der Auskleidung (1) liefert, die die folgende Bedingung erfüllt:

$$\frac{1}{2}\varepsilon_a \quad = \quad \frac{1}{2}\left(\ln\frac{1}{1-\psi}\right)^{0.6} N^{-0.6} \; + \; 1.75\frac{\sigma_b}{E} N^{-0.12} \, ,$$

wobei $N$ eine erforderliche Anzahl von störungsfreien Betriebszyklen des mit Arbeitsdruck belasteten Zylinders ist; $\varepsilon_a$ eine Verformungsamplitude ist, $\sigma_b$ ein vorübergehender Widerstand ist; $\psi$ eine Kontraktionsgrenze in der Fläche ist; und $E$ ein Elastizitätsmodul des Auskleidungsmaterials ist.

2. Zylinder nach Anspruch 1, wobei einzelne Gruppen von Schichten aus Verstärkungsmaterialfilamenten der Druckumhüllung (2), die in Spiralrichtungen ausgerichtet sind, ein Teil des Materials des Ringbands (5) sind.

3. Zylinder nach Anspruch 1, wobei das Ringband (5) aus Materialien mit höherem Elastizitätsmodul im Vergleich zu dem Material der Druckumhüllung (2) hergestellt ist.

4. Zylinder nach Anspruch 1, wobei das Ringband (5) aus Materialien mit unterschiedlichen Modulen mit geschichteter Verteilung entlang des Banddurchmessers hergestellt ist.

5. Zylinder nach Anspruch 1, wobei die Befestigungsnuten des Ringbandes (5) eine Polyederform aufweisen.

6. Zylinder nach Anspruch 1, wobei die Befestigungsnuten des Ringbandes (5) eine Ellipsenform aufweisen.

7. Zylinder nach Anspruch 1, wobei der Flanschkragen (4) mit Identifkations- und technischen Informationen gekennzeichnet sein kann.

**8.** Zylinder nach Anspruch 1, wobei der Flanschkragen (4) als separater, starr mit der Flanschdrossel verbundener Ring hergestellt ist.

**9.** Zylinder nach Anspruch 1, wobei die Außenfläche des Ringflansches in der Zone der Drossel mit einer Verjüngung zum Kragen (4) hin ausgelegt ist.

**10.** Zylinder nach Anspruch 1, wobei innerhalb der Druckumhüllung (2), gebildet aus einer Gruppe von Schichten aus in Spiralrichtungen ausgerichteten Verstärkungsmaterialfilamenten und einem zylindrischen, aus einer Kombination von Gruppen von Schichten aus Verstärkungsmaterialfilamenten bestehenden Teil, die in Spiral- und Umfangsrichtungen ausgerichtet sind, im Bereich ihrer Kreuzung im Hinblick auf ringförmige Verformung verbunden sind.

## Revendications

**1.** Le cylindre en métal composite contient une chemise (1) cylindrique en métal avec des fonds profilés et une bride (3) à collerette avec un étrangleur fixé dans un trou de tige de l'enveloppe (2) sous pression ; fait en matériau composite formé par un groupe de couches de filaments de renfort orientés dans les directions spirales et périphériques, avec une capacité de renfort différente ; **caractérisé en ce que** cette bride (3) à collerette de la chemise (1) est équipée d'une collerette (4) du côté de l'extrémité ouverte de l'étrangleur, avec un diamètre extérieur plus grand que la somme du diamètre du trou de tige de l'enveloppe (2) composite et deux tiers des filaments enroulés du matériau de renfort, où une cavité annulaire concentrique est formée entre la surface extérieure de l'enveloppe (2) composite et de la bride (3), où une bande (5) annulaire est située remplissant le volume entier de la cavité ; la bande (5) est faite du matériau de d'enveloppe (2) composite et l'étrangleur de la bride (3) à collerette est fixé dans la bande (5) annulaire grâce à des rainures de forme non circulaire dans lesquelles une combinaison de capacité de renfort et une distribution de l'épaisseur des groupes de couches de matériau de renfort de l'enveloppe (2) sous pression fournit l'intensité de déformation en chaque point du matériau de la chemise (1) remplissant les conditions suivantes :

$$\frac{1}{2}\varepsilon_a \quad = \quad \frac{1}{2}\left(\ln\frac{1}{1-\psi}\right)^{0.6} N^{-0.6} + 1.75\frac{\sigma_b}{E} N^{-0.12}$$

où $N$ est un nombre requis de cycles opérationnels sans problèmes du cylindre chargé à une pression de travail; $\varepsilon_a$ est une amplitude des déformations, $\sigma_b$ est une résistance temporaire; $\psi$ est une limite de contraction dans la zone ; et $E$ est un module de l'élasticité du matériau de chemise.

**2.** Le cylindre de la revendication 1, où des groupes individuels de couches de filaments en matériau de renfort de l'enveloppe (2) sous pression orientés dans des directions spirales font partie du matériau de la bande (5) annuelle.

**3.** Le cylindre de la revendication 1, où la bande (5) annulaire est fabriquée dans des matériaux avec un module d'élasticité plus élevé par rapport au matériau de l'enveloppe (2) sous pression.

**4.** Le cylindre de la revendication 1, où la bande (5) annulaire est fabriquée dans des matériaux avec des modules différents avec une distribution en couches le long du diamètre de la bande.

**5.** Le cylindre de la revendication 1, où les rainures de fixation de la bande (5) annulaire font une forme de polyèdre.

**6.** Le cylindre de la revendication 1, où les rainures de fixation de la bande (5) annulaire font une forme d'ellipse.

**7.** Le cylindre de la revendication 1, où la bride à collerette (4) peut être étiquetée avec les informations d'identification et les caractéristiques techniques.

**8.** Le cylindre de la revendication 1, où la bride à collerette (4) est fabriquée comme un anneau séparé, raccordé de façon rigide à l'étrangleur de la bride.

**9.** Le cylindre de la revendication 1, où la surface extérieure de la bride annulaire dans la zone de l'étrangleur est conçue avec un rétrécissement vers la collerette (4).

**10.** Le cylindre de la revendication 1, où l'intérieur de l'enveloppe (2) sous pression formée par un groupe de couches de filaments de matériau de renfort orienté dans des directions spirales et une partie cylindrique formée par une combinaison de groupes de couches de filaments de matériau de renfort orientés dans des directions spirales et périphériques, sont raccordés dans la zone de leur jonction par rapport à la déformation annulaire.

Fig.1

A (1 : 1)

Fig. 2

B-B

Fig. 3

A   (1 : 1)

Fig. 4

## REFERENCES CITED IN THE DESCRIPTION

**Patent documents cited in the description**

- US 5494188 A
- US 5538680 A
- US 5653358 A
- US 5862938 A
- US 5938209 A
- US 5979692 A
- US 6190598 B
- US 6202674 B
- US 6230922 B
- US 6158605 A

- US 3066822 A
- US 3446385 A
- US 5292027 A
- US 5822838 A
- US 5918759 A
- WO 03029718 A
- RU 2001115743
- RU 2094695
- RU 2358187 C2